# EUROPEAN PATENT APPLICATION

(11) **EP 4 644 982 A1**
(43) Date of publication of application: **05.11.2025**
(21) Application number: 23911553.8
(22) Date of filing: 04.12.2023
(51) Int. Cl.: G02F 1/1333, F21S 41/64, F21S 45/46, F21S 45/60, F21V 29/15, F21V 29/502, F21V 29/54, F21V 29/58, F21V 29/90, G01C 3/06, G02F 1/13, G02F 1/1347, G02F 1/29, F21W 102/145, F21Y 101/00, F21Y 115/10

(54) **LIQUID CRYSTAL PANEL UNIT AND LIGHT IRRADIATION DEVICE**

(30) Priority: 27.12.2022 JP 2022210750
(71) Applicant: Koito Manufacturing Co., Ltd., Tokyo 141-0001 (JP)
(72) Inventor: MIYAZAKI, Takashi, Shizuoka-shi, Shizuoka 424-8764 (JP)
(74) Representative: Maiwald GmbH
(86) International application number: PCT/JP2023/043255
(87) International publication number: WO 2024/142772

(57) **Abstract**

A liquid crystal panel unit according to the present disclosure includes a liquid crystal panel, a housing, and a liquid. The housing is configured to house the liquid crystal panel, and has an entrance port allowing light from outside to enter the liquid crystal panel, and an exit port allowing light from the liquid crystal panel to exit toward the outside. The liquid is a light-transmitting liquid in which the liquid crystal panel is to be immersed inside the housing, a refractive index of the liquid crystal panel being closer to a refractive index of the light-transmitting liquid than to a refractive index of air.

## Description

### [Technical Field]

The present disclosure relates to a liquid crystal panel unit and a light irradiation device.

### [Background Art]

Patent Literature 1 describes a beam steering apparatus that uses a plurality of polarization diffraction elements to redirect light.

### [Citation List]

### [Patent Literature]

[PTL 1] US 8982313 B2

### [Summary of Invention]

### [Technical Problem]

Patent Literature 1 describes that the polarization diffraction elements are made up of liquid crystal panels. However, liquid crystal panels may have difficulty in achieving desired functionality at high or low temperatures.

An objective of the present disclosure is to suppress optical loss due to reflection from liquid crystal panels, while keeping the liquid crystal panels at a predetermined temperature.

### [Solution to Problem]

An aspect of the present disclosure to achieve an objective described above is liquid crystal panel unit comprising: a liquid crystal panel; a housing configured to house the liquid crystal panel, the housing having an entrance port allowing light from outside to enter the liquid crystal panel, and an exit port allowing light from the liquid crystal panel to exit toward the outside; and a light-transmitting liquid in which the liquid crystal panel is to be immersed inside the housing, a refractive index of the liquid crystal panel being closer to a refractive index of the light-transmitting liquid than to a refractive index of air.

Other problems and solutions thereto disclosed by the present application will become apparent from the following Description of Embodiments and Drawings.

### [Advantageous Effects of Invention]

The present disclosure can suppress optical loss due to reflection from liquid crystal panels, while keeping the liquid crystal panels at a predetermined temperature.

### [Brief Description of Drawings]

[FIG. 1] FIG. 1 is a diagram illustrating a liquid crystal panel unit 20.
[FIG. 2] FIG. 2A is a diagram illustrating a liquid crystal panel unit 20 of a first modified example. FIG. 2B is a diagram illustrating a liquid crystal panel unit 20 of a second modified example.
[FIG. 3] FIG. 3 is a diagram illustrating a measurement system 1A.
[FIG. 4] FIG. 4A is a diagram illustrating a light deflection device 20A (liquid crystal panel unit 20). FIG. 4B is a diagram illustrating an elementary unit 21.
[FIG. 5] FIG. 5 is a diagram illustrating an illumination system 1B.
[FIG. 6] FIG. 6 is a diagram illustrating a light distribution device 20B (liquid crystal panel unit 20).
[FIG. 7] FIG. 7 is a diagram illustrating another illumination system 1B.
[FIG. 8] FIG. 8 is a diagram illustrating another light distribution device 20B' (liquid crystal panel unit 20).

### [Description of Embodiments]

### Cross-Reference to Related Applications:

The present application claims priority based on Japanese Patent Application No. 2022-210750 filed on December 27, 2022, the contents of which are incorporated herein by reference.

Embodiments of the present disclosure will be described below with reference to the Drawings. It should be noted that, in the following description, identical or similar features may be denoted by the same reference signs, and redundant explanations may be omitted.

### EMBODIMENTS:

### Liquid Crystal Panel Unit:

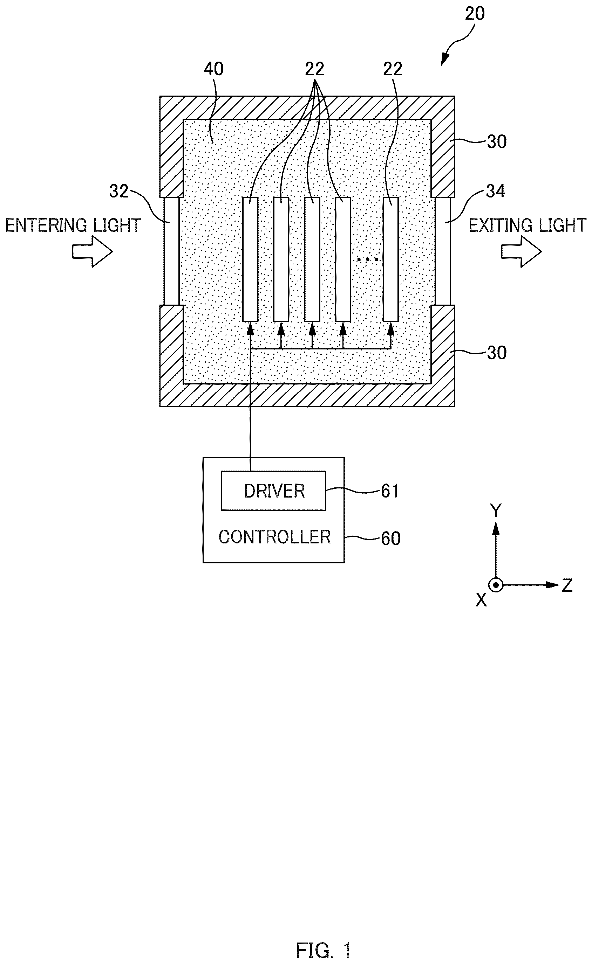

FIG. 1 is a diagram illustrating a liquid crystal panel unit 20.

In the following description, the various directions are defined as illustrated in the figure. "Z direction" is the direction perpendicular to the panel surface of a liquid crystal panel 22. It should be noted that "front" may refer to the side toward an exit port 34 as viewed from an entrance port 32, and "rear" may refer to the opposite side therefrom. "X direction" and "Y direction" are directions perpendicular to the Z direction. In this example, the Y direction is the direction along the vertical direction. The X direction is the direction perpendicular to the Z direction and the Y direction, and in this example, is the direction perpendicular to the plane of the paper.

The liquid crystal panel unit 20 is a unit including liquid crystal panel(s) 22. Light that has entered the liquid crystal panel unit 20 passes through the liquid crystal panel(s) 22 and exits toward the outside of the liquid crystal panel unit 20. The liquid crystal panel unit 20 may constitute, for example, a light deflection device (described further below), or may constitute a light distribution device 20B (e.g., an ADB device; described further below). The liquid crystal panel unit 20 includes liquid crystal panel(s) 22, a housing 30, and a liquid 40.

The liquid crystal panel 22 is a plate-like member in which a liquid crystal layer is disposed between glass substrates. The liquid crystal panel 22 may be, for example, a diffraction element configured to diffract light, or may be a light-shielding element configured to shield light in a predetermined region. The liquid crystal panel 22 includes: a pair of glass substrates; and a liquid crystal layer and transparent electrodes disposed between the glass substrates. The liquid crystal panel 22 may further include other constituent elements (e.g., polarizing plates) other than the glass substrates, the liquid crystal layer, and the transparent electrodes.

The liquid crystal panel unit 20 illustrated in the figure includes a plurality of liquid crystal panels 22. The plurality of liquid crystal panels 22 are disposed in a stack. The plurality of liquid crystal panels 22 are disposed along the direction perpendicular to the panel surface of the plate-like liquid crystal panels 22. Note, however, that the liquid crystal panel unit 20 may include only one liquid crystal panel 22.

The housing 30 is a member that houses the liquid crystal panels 22. The housing 30 is a member configured in a box shape or cylindrical shape so as to have a housing space. The housing 30 may also be referred to as a container, a casing, or a lens barrel. The liquid crystal panels 22 are housed inside the housing space in the interior of the housing 30. The housing 30 illustrated in the figure houses a plurality of liquid crystal panels 22, but the housing 30 may house only one liquid crystal panel 22. The housing 30 includes holders (not illustrated), and the liquid crystal panels 22 are held inside the housing 30 by the holders. The housing 30 is configured to allow light to pass through, and the housing 30 is provided with an entrance port 32 and an exit port 34 serving as an inlet and outlet allowing light to pass through. The housing 30 houses, in its interior, the liquid 40 in which the liquid crystal panels 22 are immersed.

The housing 30 has an entrance port 32 and an exit port 34. The entrance port 32 is a part that allows light from outside (e.g., from a light source 12) to enter the liquid crystal panels 22. The exit port 34 is a part that allows light to exit from the interior of the housing 30 toward the outside. In this example, the exit port 34 allows light from the liquid crystal panels 22 (i.e., light having passed through the liquid crystal panels 22) to exit toward the outside.

The entrance port 32 and the exit port 34 are each constituted by a light-transmissive member. The members constituting the entrance port 32 and the exit port 34 function to seal the liquid 40 inside the housing 30. In this example, the entrance port 32 and the exit port 34 are each constituted by a glass plate. Note, however, that the member for constituting the entrance port 32 and the exit port 34 is not limited to a glass plate, and may instead be an optical element such as a lens, a polarizing plate, etc.

The liquid 40 is a light-transmitting liquid 40 (transparent liquid) in which the liquid crystal panels 22 are immersed inside the housing 30. The liquid 40 is, for example, silicone oil. The liquid 40 is capable of transmitting light, particularly light at a wavelength emitted from a light source 12.

Compared to air, the liquid 40 has a larger heat capacity per unit volume. (That is, the amount of heat required to raise the temperature of a unit volume of liquid 40 by one degree is greater than the amount of heat required to raise the temperature of a unit volume of air by one degree.) Therefore, when the liquid crystal panels 22 inside the housing 30 are immersed in the liquid 40, the liquid crystal panels 22 are less likely to be affected by the temperature outside the liquid crystal panel unit 20, compared to when the liquid crystal panels 22 are surrounded by air, thereby making it easy to keep the temperature of the liquid crystal panels 22 constant. It should be noted that the liquid crystal panels 22 may not be able to achieve their desired functionality at high or low temperatures, because the alignment of liquid crystal molecules may become random at high temperatures (e.g., 60°C or higher), whereas at low temperatures (e.g., -20°C or lower), the orientation response of the liquid crystal molecules may become slow. It is thus particularly advantageous to immerse the liquid crystal panels 22 in the liquid 40 and thereby keep the liquid crystal panels 22 at a predetermined temperature.

The liquid 40 functions to reduce reflection loss at the liquid crystal panel 22. This point is described below.

In the present embodiment, the liquid crystal panels 22 are immersed in the liquid 40, and therefore, the surface of each liquid crystal panel 22 is in contact with the liquid 40. Therefore, light enters and exits the interface between the liquid crystal panel 22 and the liquid 40. Generally speaking, when light enters or exits at an interface between two substances with different refractive indices, the reflection loss decreases as the difference in refractive indices of the two substances at the interface becomes smaller. For example, at the interface between air (n = 1.0) and glass (n = 1.51), the reflection loss is approximately 4.1%, whereas at the interface between silicone oil (n = 1.39) and glass, the reflection loss is approximately 0.17%. Therefore, in the present embodiment, compared to air (n = 1.0), the liquid 40 in which the liquid crystal panels 22 are immersed has a refractive index that is closer to the refractive index (n = 1.51) of the liquid crystal panel 22 (glass). In this way, the reflection loss at the liquid crystal panels 22 can be reduced. It should be noted that, in cases where light enters or exits a plurality of liquid crystal panels 22 which are disposed in a stack, the influence of optical loss due to multiple reflections (i.e., multiple reflection loss) becomes particularly large. In the present embodiment, by immersing the liquid crystal panels 22 in the liquid 40 which has a refractive index close to that of the liquid crystal panel 22 (glass), the influence of multiple reflection loss can be reduced. As described above, in a situation where the plurality of liquid crystal panels 22 are disposed in a stack inside the housing 30, it is particularly advantageous to immerse the liquid crystal panels 22 in the liquid 40 having a refractive index close to that of the liquid crystal panel 22 (glass).

It is preferable that the housing 30 is constituted by a heat-insulating material. The heat-insulating material is a member having a low thermal conductivity. By constructing the housing 30 from the heat-insulating material, the housing 30 functions as a constant temperature bath, thereby making it easy to keep the liquid 40 at a predetermined temperature. Further, by constructing the housing 30 from the heat-insulating material, the liquid crystal panels 22 are less likely to be affected by the temperature outside the liquid crystal panel unit 20, thereby making it easy to keep the liquid crystal panels 22 at a predetermined temperature. For example, the housing 30 is constituted by a resin having a low thermal conductivity. In this way, compared to cases where the housing 30 is constituted by a metal, the liquid crystal panels 22 are less likely to be affected by external heat.

In this example, the housing 30 is constituted by a member (heat-insulating material) having a lower thermal conductivity than the member (glass) constituting the entrance port 32 and the exit port 34. In this way, the temperature outside the liquid crystal panel unit 20 is less likely to be transmitted to the interior of the housing 30. It should be noted that, in this case, it is preferable that the area of contact between the liquid 40 and the member (glass) constituting the entrance port 32 and the exit port 34 is smaller than the area of contact between the liquid 40 and the housing 30. In this way, transmission of heat from outside to the interior of the housing 30 via the entrance port 32 and the exit port 34 can be suppressed. Further, in this example, the housing 30 is constituted by a member (heat-insulating material) having a lower thermal conductivity than the liquid crystal panel 22 (glass). Furthermore, it is preferable that the housing 30 is constituted by a member (heat-insulating material) having a lower thermal conductivity than the liquid 40 (e.g., silicone oil). In this way, the temperature outside the liquid crystal panel unit 20 is less likely to be transmitted to the interior of the housing 30.

The figure illustrates a controller 60 configured to control the liquid crystal panels 22. The controller 60 includes a computing device and a storage device which are not illustrated. The computing device is a processing device constituted, for example, by a CPU, a GPU, an MPU, an ASIC, etc. A part of the computing device may be constituted by an analog operating circuit. The storage device is a device that stores programs and data and is constituted by a main storage device and an auxiliary storage device. The computing device executes the programs stored in the storage device to thereby control the liquid crystal panels 22. The controller 60 is constituted, for example, by an electronic control unit (ECU) for controlling a vehicle.

The controller 60 includes a driver 61 configured to drive the liquid crystal panels 22. The driver 61 (and the controller 60) is disposed outside the housing 30. By disposing the driver 61 outside the housing 30, it is possible to further suppress heat generation inside the housing 30. It is also preferable to provide the housing 30 with a connector (not illustrated) for inputting signals from the driver 61.

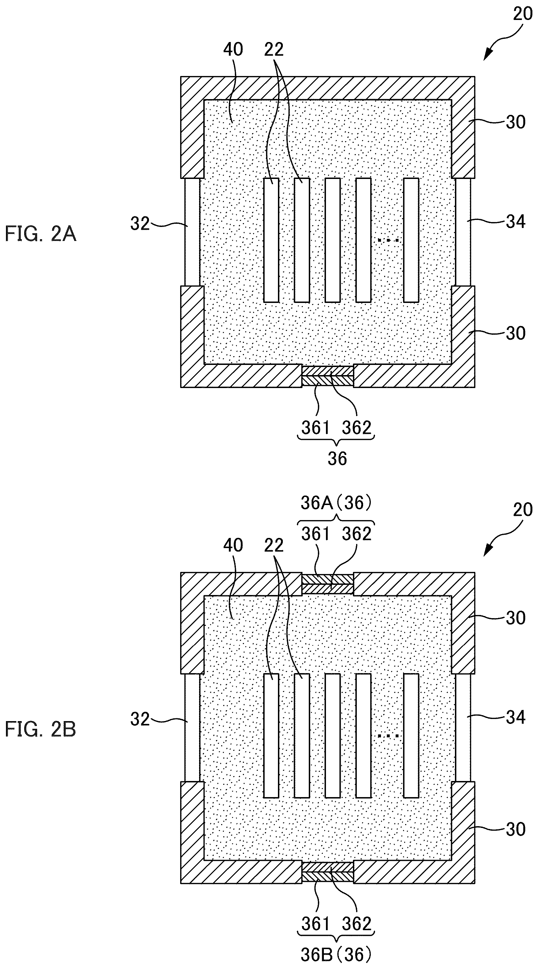

FIG. 2A is a diagram illustrating a liquid crystal panel unit 20 of a first modified example. FIG. 2B is a diagram illustrating a liquid crystal panel unit 20 of a second modified example.

The housing 30 of the liquid crystal panel unit 20 according to the first and second modified examples includes a temperature regulator 36. The temperature regulator 36 is configured to control the temperature of the liquid 40. Herein, the temperature regulator 36 includes a temperature-regulating element 361 and a heat transfer plate 362.

The temperature-regulating element 361 is an element configured to perform cooling and/or heating. In this example, the temperature regulator 36 includes a Peltier device as the temperature-regulating element 361. A Peltier device is an element capable of performing both cooling and heating. One surface of the plate-shaped Peltier device serves as a cooling surface (heat absorption surface), and the other surface serves as a heating surface. The cooling surface and the heating surface can be switched depending on the direction of the current. The temperature-regulating element 361 is not limited to an element including a Peltier device. For example, the temperature-regulating element 361 may be constituted by a cooling element (cooler) or a heating element (heater). Note, however, that the temperature-regulating element 361 is preferably a Peltier device, because when the temperature regulator 36 includes a Peltier device, the temperature regulator 36 can be configured to enable both cooling and heating of the liquid 40. In cases where the temperature regulator 36 includes a Peltier device, it is preferable that no wall surface (heat-insulating material) of the housing 30 exists in a section where the temperature regulator 36 is disposed. This makes it easy to create a temperature difference between the cooling surface and the heating surface of the Peltier device, thereby enabling efficient temperature regulation of the liquid 40 using the Peltier device.

The heat transfer plate 362 is a member for transmitting heat between the temperature-regulating element 361 and the liquid 40. The heat transfer plate 362 is constituted by a member having a high thermal conductivity, and is constituted, for example, by a copper plate. The heat transfer plate 362 is disposed on the inner surface (the surface on the liquid 40 side) of the temperature-regulating element 361. In the figure, the area of contact between the heat transfer plate 362 and the liquid 40 is illustrated as being substantially the same as the area of contact between the heat transfer plate 362 and the temperature-regulating element 361, but the heat transfer plate 362 may be configured such that the area of contact between the heat transfer plate 362 and the liquid 40 is wider than the area of contact between the heat transfer plate 362 and the temperature-regulating element 361. In this way, the heat of the temperature-regulating element 361 can be transmitted efficiently to the liquid 40. It should be noted that the temperature regulator 36 does not have to include a heat transfer plate 362 (i.e., the temperature regulator 36 may be configured such that the temperature-regulating element 361 is in direct contact with the liquid 40).

As illustrated in the second modified example of FIG. 2B, the housing 30 may include two temperature regulators 36 (a first temperature regulator 36A and a second temperature regulator 36B). In this case, the first temperature regulator 36A and the second temperature regulator 36B may be controlled to have temperatures different from each other. By making the temperature of the first temperature regulator 36A different from that of the second temperature regulator 36B, a temperature difference can be created in the liquid 40 inside the housing 30, thereby promoting convection of the liquid 40 and facilitating temperature regulation of the liquid crystal panels 22.

The figure illustrates the first temperature regulator 36A disposed above the second temperature regulator 36B. In cases where the first temperature regulator 36A is disposed above the second temperature regulator 36B as in this example, it is preferable that the first temperature regulator 36A is controlled to have a lower temperature than the second temperature regulator 36B. For example, it is preferable that the first temperature regulator 36A includes a Peltier device for cooling (or a cooling element), and the second temperature regulator 36B includes a Peltier device for heating (or a heating element). In this way, the liquid 40 having been cooled by the first temperature regulator 36A and thus having an increased specific gravity will descend, whereas the liquid 40 having been heated by the second temperature regulator 36B and thus having a reduced specific gravity will ascend, thereby further promoting convection and further facilitating temperature regulation of the liquid crystal panels 22. It should be noted that the housing 30 may include two or more temperature regulators 36. Further, instead of employing temperature difference of the liquid 40, the liquid 40 may be stirred with a stirrer provided inside the housing 30. In this case, the liquid 40 will be stirred even when the housing 30 includes only one temperature regulator 36, so the temperature of the liquid crystal panels 22 can be regulated easily. The housing 30 does not need to include a temperature regulator 36. Note, however, that by providing the housing 30 with a temperature regulator 36, the liquid 40 in which the liquid crystal panels 22 are immersed can be kept at a predetermined temperature, thereby making it easy to keep the liquid crystal panels 22 at a predetermined temperature.

As illustrated in FIGS. 1, 2A, and 2B, the liquid crystal panel unit 20 of the present embodiment includes: liquid crystal panels 22; a housing 30 that houses the liquid crystal panels 22 and that has an entrance port 32 and an exit port 34; and a light-transmitting liquid 40 in which the liquid crystal panels 22 are immersed inside the housing 30. In this way, the liquid crystal panels 22 can be kept at a predetermined temperature. Further, by immersing the liquid crystal panels 22 in the liquid 40 whose refractive index is closer to that of the liquid crystal panel 22 than the refractive index of air is to that of the panel, reflection loss at the liquid crystal panels 22 can be reduced.

It should be noted that, as described above, it is preferable that the housing 30 houses a plurality of liquid crystal panels 22 disposed in a stack configuration in a state immersed in the liquid 40. In this way, multiple reflection loss can be suppressed.

### First Usage Example of Liquid Crystal Panel Unit 20: Light Deflection Device

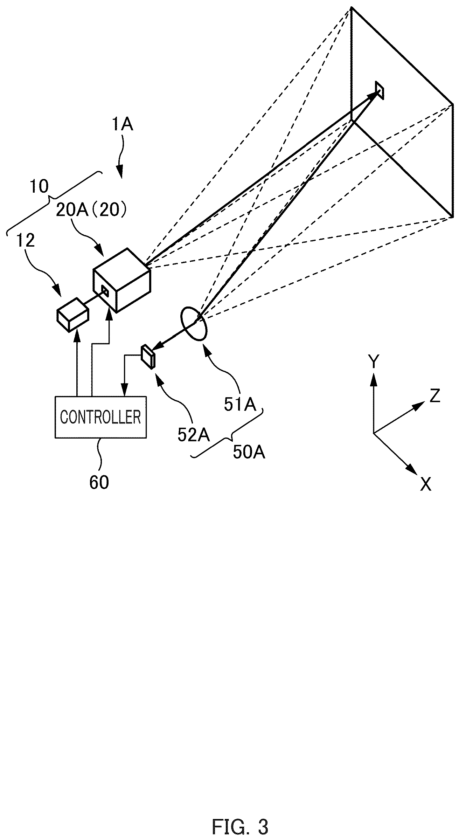

FIG. 3 is a diagram illustrating a measurement system 1A.

The measurement system 1A is a device for measuring distance. The measurement system 1A is a device having the functionality of so-called LiDAR (light detection and ranging; laser imaging detection and ranging). The measurement system 1A is configured to irradiate measurement light toward a measurement area and detect reflected light that has been reflected on the surface of an object within the measurement area, to thereby measure the distance to the object by time-of-flight (TOF) technology. It should be noted that the measurement system 1A is not limited to TOF technology, and may measure distance by, for example, frequency modulated continuous wave (FMCW) technology. The measurement system 1A includes a light irradiation device 10, a light-receiving device 50A, and a controller 60.

The light irradiation device 10 is a device configured to irradiate light. The light irradiation device 10 is capable of changing the position of irradiated light. The light irradiation device 10 illustrated in FIG. 3 is capable of moving the position of a spot to be irradiated with measurement light. It should be noted that the light irradiation device 10 can move the spot irradiated with measurement light continuously by scanning, or can move the spot irradiated with measurement light discontinuously in a skipping manner.

The light irradiation device 10 includes a light source 12 and a light deflection device 20A. The light source 12 is a device configured to emit light. In this example, the light source 12 is a laser emission device configured to emit a laser beam. The light deflection device 20A is a device configured to change the direction of light. Light emitted from the light source 12 enters the light deflection device 20A, and the light deflection device 20A changes the direction of the light and irradiates the light toward a measurement area. The light deflection device 20A is constituted by a liquid crystal panel unit 20. (Hence, the light irradiation device 10 includes the light source 12, liquid crystal panels 22, a housing 30, and a liquid 40.) The liquid crystal panel unit 20 constituting the light deflection device 20A will be described further below.

The light-receiving device 50A is a device configured to receive reflected light. The light-receiving device 50A includes a light-receiving optical system 51A and a light-receiving sensor 52A. The light-receiving optical system 51A is an optical system for making a light receiver receive reflected light arriving from a measurement area. The light-receiving sensor 52A is an element (optical/electrical converting element) configured to convert the received reflected light (optical signal) into an electric signal. The light-receiving sensor 52A may be constituted by an image sensor in which pixels are lined up in the X and Y directions, or may be constituted by a line sensor in which pixels are lined up in one direction (X direction or Y direction), or may be constituted by a single pixel. The light-receiving sensor 52A outputs the light reception result to the controller 60 as a light reception signal.

The controller 60 governs control of the measurement system 1A. The controller 60 is configured to control the light irradiation device 10. For example, the controller 60 is configured to control emission of light from the light source 12 and also control the direction of measurement light emitted from the light deflection device 20A. It should be noted that the controller 60 includes a driver 61 configured to drive the liquid crystal panels 22 in the light deflection device 20A, and the direction of measurement light emitted from the light deflection device 20A is controlled by controlling the liquid crystal panels 22. The controller 60 is also configured to measure the distance to an object on the basis of an output signal from the light-receiving sensor 52A. The controller 60 makes its computing device execute a program stored in its storage device, to execute various processes for measuring the distance to an object. For example, the controller 60 calculates the time-of-flight of measurement light based on the timing that the light was emitted from the light source 12 and the timing that the light was received by the light-receiving sensor 52A to calculate the distance (Z coordinate) to the reflection point based on the time-of-flight of the measurement light, and also calculates the three-dimensional coordinates (X, Y, and Z coordinates) of the reflection point based on the direction of the light emitted by the light deflection device 20A. Further, the controller 60 changes the direction of the measurement light with the light deflection device 20A, to thereby acquire the three-dimensional coordinates of a multitude of reflection points within a measurement area and thus acquire so-called point-group data.

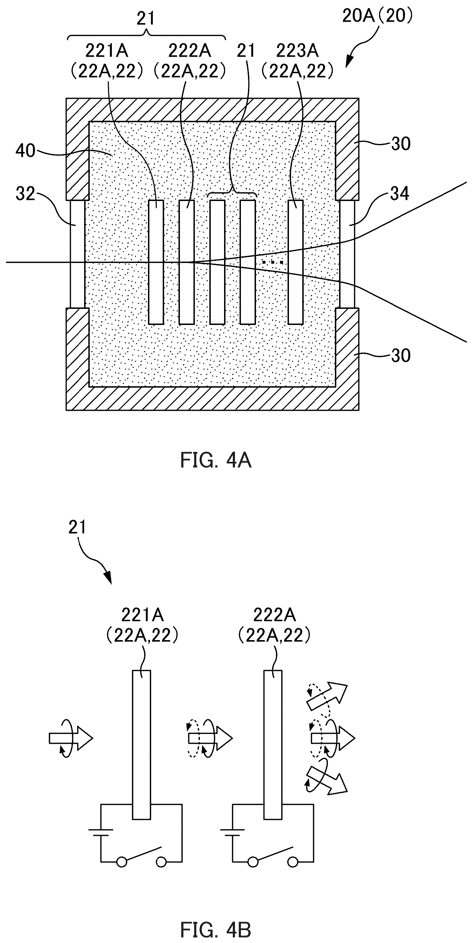

FIG. 4A is a diagram illustrating the light deflection device 20A (liquid crystal panel unit 20).

The light deflection device 20A is constituted by the aforementioned liquid crystal panel unit 20, and includes a plurality of liquid crystal panels 22A, a housing 30, and a liquid 40. As will be described below, the plurality of liquid crystal panels 22A of the light deflection device 20A includes liquid crystal panels (221A, 222A, 223A) configured to control the direction of incident light. In this example, the light deflection device 20A includes elementary units 21 each constituted by the liquid crystal panels 22.

FIG. 4B is a diagram illustrating an elementary unit 21.

The elementary unit 21 is constituted by liquid crystal panels 22, and is a unit configured to change the direction of light (a unit configured to control the direction of incident light). The deflection angle of light by a single elementary unit 21 is small, but by providing a plurality of elementary units 21, the deflection angle of light can be increased. For example, by providing sixteen sets of elementary units 21, each capable of changing the direction of light within a range of ±0.625° (i.e., 1.25°), it becomes possible to change the direction of light within a range of 20°. It should be noted that the number of elementary units 21 to be provided in the light deflection device 20A is not limited to sixteen. Further, if only a small change in the angle of light is required, the light deflection device 20A may include only one elementary unit 21.

The elementary unit 21 illustrated in the figure is constituted by two liquid crystal panels 22A (221A, 222A). In this example, the elementary unit 21 includes a liquid crystal retarder 221A and a liquid crystal grating 222A.

The liquid crystal retarder 221A is a liquid crystal panel configured to control phase retardation by changing the application voltage. The liquid crystal retarder 221A functions as a variable λ/2 retardation plate. In this example, when circularly polarized light enters the voltage-applied liquid crystal retarder 221A, circularly polarized light with reversed handedness (direction of rotation) will be emitted from the liquid crystal retarder 221A. For example, in cases where incident light is left-hand circularly polarized light (or right-hand circularly polarized light), right-hand circularly polarized light (or left-hand circularly polarized light) will be emitted from the liquid crystal retarder 221A when a voltage is applied to the liquid crystal retarder 221A, whereas left-hand circularly polarized light (or right-hand circularly polarized light) will be emitted from the liquid crystal retarder 221A when no voltage is applied to the liquid crystal retarder 221A.

The liquid crystal grating 222A is a liquid crystal panel configured to control diffraction by changing the application voltage. The liquid crystal grating 222A functions as a variable polarization diffraction grating. In this example, when circularly polarized light enters the voltage-applied liquid crystal grating 222A, the light diffracts in the direction corresponding to the handedness (direction of rotation). For example, when a voltage is applied to the liquid crystal grating 222A, the incident left-hand circularly polarized light (or right-hand circularly polarized light) is emitted as light directed into the positive first order (or the negative first order), whereas when no voltage is applied to the liquid crystal grating 222A, the light passes through without being diffracted.

The liquid crystal panels 22A (in this example, the liquid crystal retarder 221A and the liquid crystal grating 222A) constituting the elementary unit 21 are liquid crystal panels configured to change the direction of incident light stepwise. For example, in cases where the elementary unit 21 is disposed in air, the elementary unit 21 can change the direction of emitted light in a stepwise manner by angles of +0.625°, 0°, and -0.625° relative to the angle of incident light. The controller 60 controls the direction of emitted light relative to the incident light by controlling the voltage of the liquid crystal retarder 221A and the liquid crystal grating 222A.

Incidentally, in the present embodiment, the liquid crystal panels 22A constituting the elementary unit 21 are immersed in the liquid 40 whose refractive index is closer to the refractive index of the liquid crystal panel 22A (glass; n = 1.51) as compared to air (n = 1.0). Therefore, when the panels are placed in the liquid 40, the angle (deflection angle) by which emitted light (i.e., light exiting the elementary unit 21) can be changed relative to incident light (i.e., light entering the elementary unit 21) is reduced, compared to cases where the panels are placed in air; for example, the deflection angle becomes smaller than ±0.625°. However, light that has been deflected inside the housing 30 ultimately exits toward the outside (into air) from the exit port 34 of the liquid crystal panel unit 20, so when attention is focused on the emitted light exiting from the exit port 34, the elementary unit 21 immersed in the liquid 40 can change the direction of the emitted light, relative to the angle of the incident light, by the same angle (e.g., ±0.625°) as when placed in air.

It should be noted that, in cases where the liquid crystal panels 22 configured to change the direction of light are disposed in a stack configuration, the further forward the liquid crystal panels 22 are positioned, the greater the angle of incident light may become. Therefore, in cases where the liquid crystal panels have angular dependency, the performance of the liquid crystal panels 22 positioned further toward the front may be affected by the incident angle of light when the liquid crystal panels 22 configured to change the direction of light are disposed in a stack configuration. In the present embodiment, however, since the liquid crystal panels 22 are immersed in the liquid 40, the angle of light emitted from each elementary unit 21 becomes small inside the housing 30, and as a result, the angle of light incident on the front-positioned liquid crystal panels 22 can be reduced. Thus, it is possible to achieve the effect that, even in cases where the liquid crystal panels 22A have angular dependency (i.e., even in cases where the performance of the liquid crystal panels 22A is affected by the incident angle of light), the influence of angular dependency can be reduced by immersing the liquid crystal panels 22A in the liquid 40. As described above, the configuration of immersing the liquid crystal panels 22 in the liquid 40 is particularly advantageous in cases where the liquid crystal panels 22 that are configured to change the direction of light have angular dependency and are disposed in a stack.

As described above, the elementary unit 21 is constituted by two liquid crystal panels 22A (the liquid crystal retarder 221A and the liquid crystal grating 222A). Note, however, that the elementary unit 21 may be constituted by a single liquid crystal panel 22A or more than two of such panels.

In addition to the liquid crystal panels configured to change the direction of light stepwise (i.e., the liquid crystal retarder 221A and the liquid crystal grating 222A constituting the elementary unit 21; corresponding to "first liquid crystal panels"), the light deflection device 20A may also include a liquid crystal panel configured to change the direction of light continuously (corresponding to "second liquid crystal panel"). It should be noted that, in cases where the light deflection device 20A is constituted only by a plurality of elementary units 21, the directions in which light can be emitted become discrete (for example, the directions in which light can be emitted become discrete at intervals of 0.625°). In contrast, by further providing a liquid crystal panel ("second liquid crystal panel") configured to change the direction of light continuously, it becomes possible to emit light continuously over a wide range. For example, assuming that the number of elementary units 21 is N, it becomes possible to continuously scan light over a range of 1.25° × N. In this example, of the plurality of liquid crystal panels 22A lined up in the Z direction, the liquid crystal panel 22A closest to the exit port 34 is a continuous-steering liquid crystal panel 223A capable of continuously changing the direction of light over a range of ±0.625° or greater. It should be noted that the range over which the continuous-steering liquid crystal panel 223A can change the angle of light is preferably wider than the angle of light (deflection angle; 0.625° in this example) that can be changed stepwise by a single elementary unit 21. Further, the range over which the continuous-steering liquid crystal panel 223A can change the angle of light may be less than twice the deflection angle of a single elementary unit 21. Even when the deflection angle of the second liquid crystal panel (the continuous-steering liquid crystal panel 223A) is small as in this example, combining the second liquid crystal panel with a plurality of first liquid crystal panels (a plurality of elementary units 21) can enable continuous scanning of light over a wide range (e.g., 20°).

Changing the direction of light over a range of 20° requires sixteen sets (i.e., 20/1.25) of the elementary units 21. Disposing sixteen sets of the elementary units 21 and one continuous-steering liquid crystal panel 223A in a stack configuration results in a total of sixty-six interfaces between the silicone oil and glass. In this case, since the reflection loss at each interface between the silicone oil (n = 1.39) and glass is approximately 0.17%, the emitted light becomes approximately 89.3% (the 66th power of 0.9983%) of the incident light. It should be noted that, if the liquid crystal panels 22A were not immersed in the liquid 40 but were instead disposed in air, since the reflection loss at each interface between air (n = 1.0) and glass (n = 1.51) is approximately 4.1%, the emitted light would become approximately 6.31% (the 66th power of 0.959%) of the incident light. As described above, in situations where a multitude of liquid crystal panels 22 are housed in the housing 30, immersing the liquid crystal panels 22 in the liquid 40-which has a refractive index close to that of the liquid crystal panel 22 (glass)-can reduce the influence of multiple reflection loss and significantly enhance the intensity of the emitted light relative to the incident light.

As described above, the light irradiation device 10 illustrated in FIG. 3 includes: a light source 12; liquid crystal panels 22; a housing 30 that houses the liquid crystal panels 22 and that has an entrance port 32 and an exit port 34; and a light-transmitting liquid 40 in which the liquid crystal panels 22 are immersed inside the housing 30. In this way, the liquid crystal panels 22 can be kept at a predetermined temperature. Further, by immersing the liquid crystal panels 22 in the liquid 40 whose refractive index is closer to that of the liquid crystal panel 22 than the refractive index of air is to that of the panel, reflection loss at the liquid crystal panels 22 can be reduced.

Further, as illustrated in FIG. 4, it is preferable that the housing 30 houses a plurality of the liquid crystal panels 22 disposed in a stack in a state where they are immersed in the liquid 40. In this way, multiple reflection loss can be suppressed.

### Second Usage Example of Liquid Crystal Panel Unit 20: Light Distribution Device

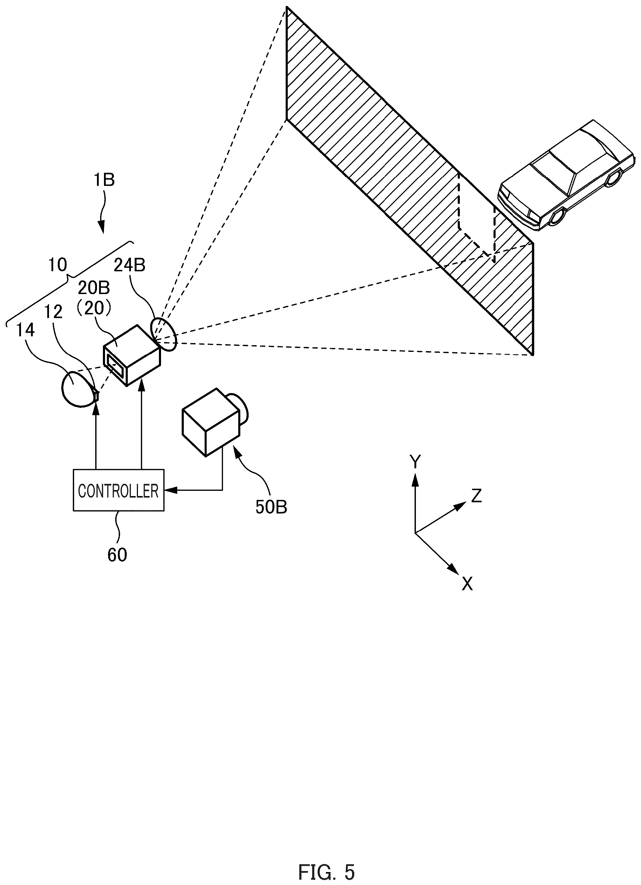

FIG. 5 is a diagram illustrating an illumination system 1B.

The illumination system 1B illustrated in the figure is a device for illumination by controlling light distribution. For example, the illumination system 1B is a variable light distribution headlamp system having an adaptive driving beam (ADB) function, and is configured to control the region to be irradiated with light on the basis of the position of a vehicle ahead (e.g., an oncoming or preceding vehicle). The illumination system 1B includes a light irradiation device 10, a camera 50B, and a controller 60.

The light irradiation device 10 is capable of changing the position of light to be irradiated. The light irradiation device 10 illustrated in FIG. 5 is capable of changing the light irradiation region. The light irradiation device 10 includes a light source 12, a light distribution device 20B, and a projection lens 24B.

The light source 12 is a device configured to emit light. In this example, the light source 12 is constituted by at least one light-emitting diode (LED). The light source 12 may be constituted by a single LED chip, or may be constituted by an LED array including a plurality of LED chips. It should be noted that the light source 12 does not have to be an LED, and may be, for example, a high-intensity discharge lamp (HID). As described here, the light to be emitted from the light source 12 of the light irradiation device 10 is not limited to a laser beam. The light emitted from the light source 12 is reflected by a reflection body (reflector 14) and then enters through the entrance port 32 of the light distribution device 20B. The light emitted from the light source 12 is irradiated toward the front via the light distribution device 20B.

The light distribution device 20B is a device configured to control the light irradiation region (stated differently, the light distribution pattern). In this example, the light distribution device 20B shields a portion of incident light to thereby control the light distribution pattern. For example, the light distribution device 20B is configured to generate a light distribution pattern in which light irradiation is shielded in a region where there is a vehicle ahead but light is irradiated in other regions. It should be noted that "light shielding" encompasses light reduction. The light distribution device 20B is constituted by a liquid crystal panel unit 20. (Hence, the light irradiation device 10 includes a light source 12, a liquid crystal panel 22, a housing 30, and a liquid 40). The liquid crystal panel unit 20 constituting the light distribution device 20B will be described further below.

The projection lens 24B is a lens configured to project, toward the front, the light emitted from the light distribution device 20B.

The camera 50B is a device (image-capturing device) configured to capture images ahead. It should be noted that the camera 50B includes a light-receiving optical system and a light-receiving sensor (image sensor) which are not illustrated. The camera 50B is configured to output data of captured images (image data) to the controller 60.

The controller 60 governs control of the illumination system 1B. For example, the controller 60 is configured to calculate the position of a vehicle ahead based on the image data acquired from the camera 50B and, based on the calculated position of the vehicle ahead, control the light distribution device 20B so as to shield light irradiating toward the vehicle ahead.

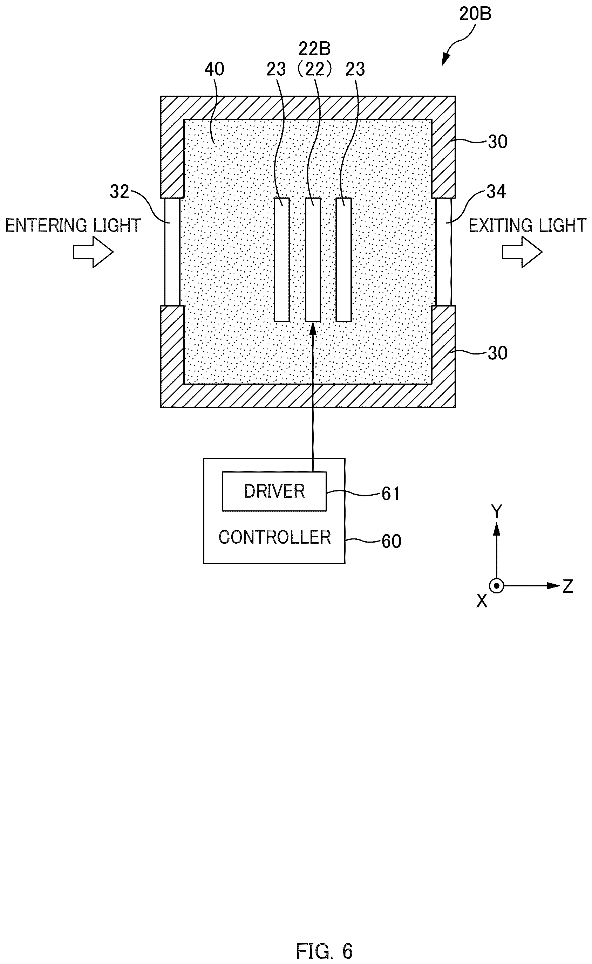

FIG. 6 is a diagram illustrating the light distribution device 20B (liquid crystal panel unit 20). It should be noted that, for reference's sake, the figure also illustrates the controller 60 configured to control the light distribution device 20B.

The light distribution device 20B is constituted by the liquid crystal panel unit 20 as described above. Hence, the light distribution device 20B includes a liquid crystal panel 22, a housing 30, and a liquid 40. The light distribution device 20B includes a light-shielding liquid crystal panel 22B as the liquid crystal panel 22.

The light-shielding liquid crystal panel 22B is a liquid crystal panel configured to control a light-shielding region. The light-shielding liquid crystal panel 22B functions as a shutter. It should be noted that the expression "light shielding" encompasses light reduction. Regions other than the light-shielding region of the light-shielding liquid crystal panel 22B are transmissive regions where incident light can pass through. The light-shielding liquid crystal panel 22B is capable of changing the light-shielding region. The light-shielding liquid crystal panel 22B is configured to shield light in a region based on a signal from the controller 60 (driver 61). The light-shielding liquid crystal panel 22B is disposed within the focal plane of the projection lens 24B. It should be noted that the focal plane of the projection lens 24B is set with consideration given to, for example, the refractive index of the liquid 40 and the refractive index of the glass constituting the entrance port 32 and the exit port 34, and the light-shielding liquid crystal panel 22B is disposed within the focal plane of the projection lens 24B which has been set with consideration given to the refractive index of the liquid 40 etc.

Polarizing plates 23 are respectively disposed in front of and behind the light-shielding liquid crystal panel 22B. In this example, the polarizing plates 23 are housed in the housing 30. As described here, the liquid crystal panel unit 20 may include plate-like members, other than the liquid crystal panel 22, disposed in a stack together with the liquid crystal panel 22, and these panels may be housed in the housing 30. Further, the light distribution device 20B may include other liquid crystal panels 22 (e.g., later-described liquid crystal lenses 22C) disposed in a stack together with the light-shielding liquid crystal panel 22B, and these panels may be housed in the housing 30.

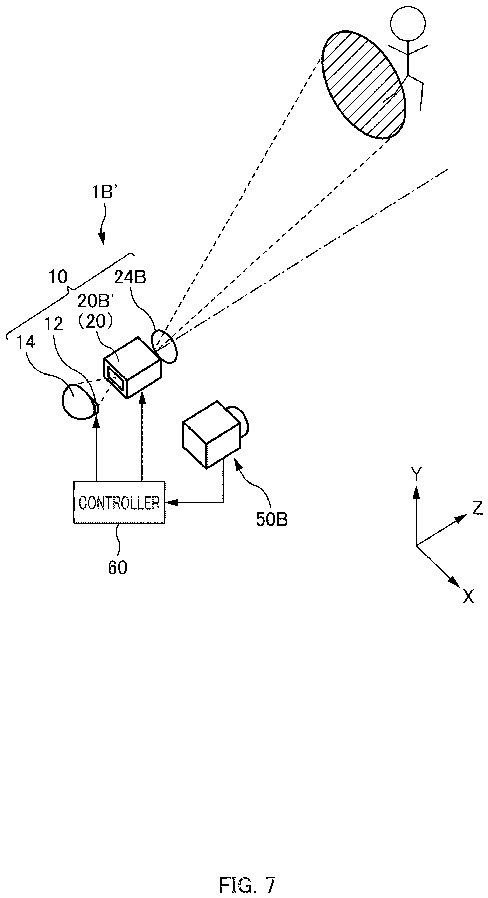

FIG. 7 is a diagram illustrating another illumination system 1B'.

The illumination system 1B' illustrated in the figure is a position-variable spotlight system capable of changing the position of a spotlight. For example, the illumination system 1B' is configured to control the light irradiation region based on the position of a pedestrian. The illumination system 1B' includes a light irradiation device 10, a camera 50B, and a controller 60. The camera 50B and the controller 60 of the illumination system 1B' illustrated in FIG. 7 are substantially the same as those of the illumination system 1B illustrated in FIG. 5, so explanation is omitted herefrom.

The light irradiation device 10 includes a light source 12 and a light distribution device 20B'. The light source 12 is substantially the same as that of the illumination system 1B illustrated in FIG. 5, so explanation is omitted herefrom.

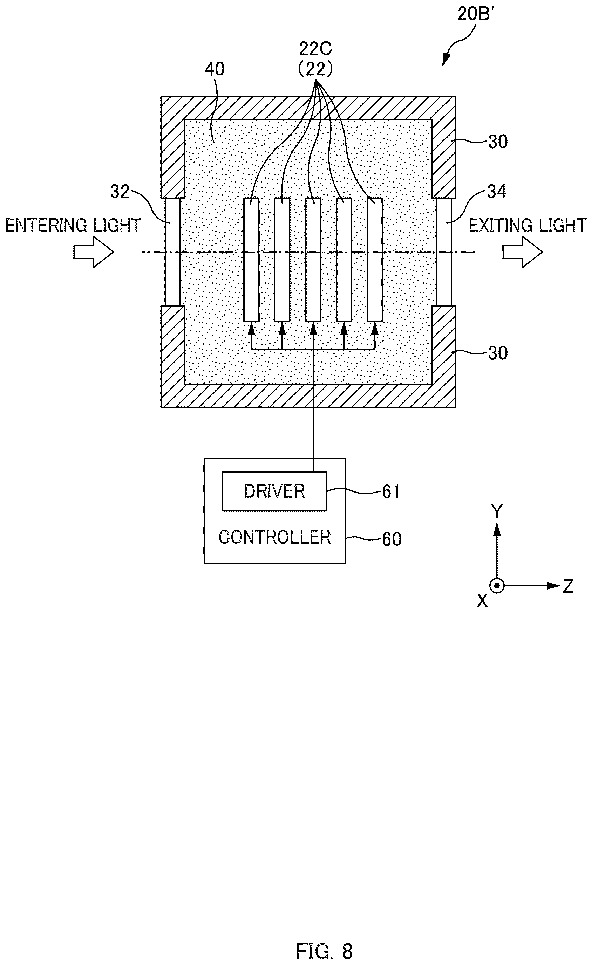

FIG. 8 is a diagram illustrating another light distribution device 20B' (liquid crystal panel unit 20). The light distribution device 20B' illustrated in the figure is constituted by the liquid crystal panel unit 20 as described above, and includes a plurality of liquid crystal panels 22, a housing 30, and a liquid 40. (Hence, the light irradiation device 10 includes a light source 12, liquid crystal panels 22, a housing 30, and a liquid 40). The light distribution device 20B' includes a plurality of liquid crystal lenses 22C (liquid crystal lens group) as the plurality of liquid crystal panels 22.

The liquid crystal lens 22C is a liquid crystal panel functioning as a lens. The liquid crystal lens 22C is configured such that its optical properties are variable by controlling the application voltage. In this example, the liquid crystal lens 22C is capable of changing the center position of the lens within the plane of the liquid crystal panel (i.e., the position of the rotation symmetry axis of the refractive index distribution within the plane of the liquid crystal panel). By changing the lens center position of the liquid crystal lens 22C relative to the incident light, the position of the spotlight can be shifted in the X and Y directions relative to the center of the incident light's bundle of rays (cf. the alternate long and short dashed lines in the figure). It should be noted that the liquid crystal lens 22C may be configured such that the focal distance is variable.

As described above, the light irradiation devices 10 illustrated in FIGS. 5 and 7 each include: a light source 12; liquid crystal panel(s) 22; a housing 30 that houses the liquid crystal panel(s) 22 and that has an entrance port 32 and an exit port 34; and a light-transmitting liquid 40 in which the liquid crystal panel(s) 22 is/are immersed inside the housing 30. In this way, the liquid crystal panel(s) 22 can be kept at a predetermined temperature. Further, by immersing the liquid crystal panel(s) 22 in the liquid 40 whose refractive index is closer to that of the liquid crystal panel 22 than the refractive index of air is to that of the panel, reflection loss at the liquid crystal panel(s) 22 can be reduced.

It should be noted that, as illustrated in FIG. 6, the housing 30 may house a single liquid crystal panel 22 in a state immersed in the liquid 40. Alternatively, as illustrated in FIG. 8, the housing 30 may house a plurality of liquid crystal panels 22 disposed in a stack in a state immersed in the liquid 40. In both cases, reflection loss at the liquid crystal panel(s) 22 can be reduced.

Embodiments of the present disclosure have been described in detail above, but the present disclosure is not limited to the foregoing embodiments and may encompass various modified examples. The foregoing embodiments illustrate, in detail, various features to facilitate the understanding of the present disclosure, but the present disclosure is not necessarily limited to embodiments including all of the features described above. Some features of the foregoing embodiments may be omitted, replaced, or supplemented by other features.

### [Reference Signs List]

1A: Measurement system;
1B, 1B': Illumination system;
10: Light irradiation device;
12: Light source;
14: Reflector;
20: Liquid crystal panel unit;
20A: Light deflection device;
20B, 20B': Light distribution device;
21: Elementary unit;
22: Liquid crystal panel;
22A: Liquid crystal panel;
221A: Liquid crystal retarder;
222A: Liquid crystal grating;
223A: Continuous-steering liquid crystal panel;
22B: Light-shielding liquid crystal panel;
22C: Liquid crystal lens;
23: Polarizing plate;
24B: Projection lens;
30: Housing;
32: Entrance port;
34: Exit port;
36: Temperature regulator;
36A: First temperature regulator;
36B: Second temperature regulator;
361: Temperature-regulating element;
362: Heat transfer plate;
40: Liquid;
50A: Light-receiving device;
50B: Camera;
51A: Light-receiving optical system;
52A: Light-receiving sensor;
60: Controller;
61: Driver.

## Claims

1. A liquid crystal panel unit comprising:
a liquid crystal panel;
a housing configured to house the liquid crystal panel, the housing having an entrance port allowing light from outside to enter the liquid crystal panel, and an exit port allowing light from the liquid crystal panel to exit toward the outside; and
a light-transmitting liquid in which the liquid crystal panel is to be immersed inside the housing, a refractive index of the liquid crystal panel being closer to a refractive index of the light-transmitting liquid than to a refractive index of air.

2. The liquid crystal panel unit according to claim 1, wherein
the liquid crystal panel comprises a plurality of liquid crystal panels, and
the housing houses the plurality of liquid crystal panels disposed in a stack in a state where the plurality of liquid crystal panels are immersed in the liquid.

3. The liquid crystal panel unit according to claim 1 or 2, wherein
the liquid crystal panel comprises a liquid crystal panel configured to control a direction of incident light and being housed in the housing.

4. The liquid crystal panel unit according to claim 3, wherein
the liquid crystal panel comprises
a plurality of first liquid crystal panels configured to change the direction of light stepwise, and
a second liquid crystal panel configured to change the direction of light continuously,
the first liquid crystal panels and the second liquid crystal panel being housed in the housing.

5. The liquid crystal panel unit according to any one of claims 1 to 4, wherein
the liquid crystal panel comprises a liquid crystal panel configured to control a light-shielding region and being housed in the housing.

6. The liquid crystal panel unit according to any one of claims 1 to 5, wherein
the housing is constituted by a heat-insulating material.

7. The liquid crystal panel unit according to any one of claims 1 to 6, wherein
the housing includes a temperature regulator configured to control a temperature of the liquid.

8. The liquid crystal panel unit according to claim 7, wherein
the temperature regulator comprises a first temperature regulator and a second temperature regulator configured to control the temperature of the liquid,
the housing includes the first temperature regulator and the second temperature regulator, and
the first temperature regulator and the second temperature regulator are controlled to have temperatures different from each other.

9. The liquid crystal panel unit according to claim 8, wherein
the first temperature regulator is disposed above the second temperature regulator and is controlled to have a lower temperature than the second temperature regulator.

10. A light irradiation device comprising:
a light source configured to emit light;
a liquid crystal panel;
a housing configured to house the liquid crystal panel, the housing having an entrance port allowing light from the light source to enter the liquid crystal panel, and an exit port allowing light from the liquid crystal panel to exit toward outside; and
a light-transmitting liquid in which the liquid crystal panel is to be immersed inside the housing, a refractive index of the liquid crystal panel being closer to a refractive index of the light-transmitting liquid than to a refractive index of air.
